**Europäisches Patentamt**

**European Patent Office**

**Office européen des brevets**

(11) Veröffentlichungsnummer: **0 448 907 A1**

(12) # EUROPÄISCHE PATENTANMELDUNG

(21) Anmeldenummer: 90730001.6

(22) Anmeldetag: 01.03.90

(51) Int. Cl.5: **E05D 7/10**, E05D 7/12, E05D 5/02, H02B 1/26

(43) Veröffentlichungstag der Anmeldung:
02.10.91 Patentblatt 91/40

(84) Benannte Vertragsstaaten:
AT BE CH DE ES FR GB GR IT LI LU NL SE

(71) Anmelder: **Siemens Aktiengesellschaft**
**Wittelsbacherplatz 2**
**W-8000 München 2(DE)**

(72) Erfinder: **Blum, Richard**
**Pestalozzistrasse 16**
**W-6057 Dietzenbach(DE)**
Erfinder: **Schmidt, Ludwig**
**Kohlrauschweg 9**
**W-6000 Frankfurt 90(DE)**
Erfinder: **Küster, Willi**
**Blümensgrund 3**
**W-6460 Gelnhausen(DE)**
Erfinder: **Groh, Hans-Michael**
**Erfurter Strasse 11**
**W-6452 Hainburg 2(DE)**

(54) **Scharnieranordnung für die Tür eines Schaltschrankes und Verfahren zur Montage.**

(57) Eine Scharnieranordnung für die Tür (77) eines Schaltschrankes umfaßt einen Scharnierarm (60), der an einer Frontfläche (86) eines Gerüstelementes (87) mittels eines Fußteiles (63) zu befestigen ist sowie ein bewegbares Scharnierteil (70). Das bewegbare Scharnierteil (70) ist aus zwei Teilstücken (67, 68) zusammengesetzt, die zwischen sich die Enden eines den Scharnierarm (60) durchsetzenden Scharnierbolzens (62) in taschenartigen Ausnehmungen (75) aufnehmen. Jedes Teilstück (67, 68) greift mit Vorsprüngen (69, 71) in entsprechende Vertiefungen (73) des anderen Teilstückes ein. Durch korrespondierende Durchgangslöcher (72) in den Vorsprüngen (69, 71), die jeweils etwa zur Hälfte unterhalb und oberhalb der Teilungsebene (T) liegen, werden Schrauben (76) eingedreht, die zunächst die Teilstücke (67, 68) miteinander verbinden. Nach dem Einfügen der Scharnieranordnung in eine Ausnehmung am Rande der Tür (77) werden die Schrauben (76) weitergedreht und spannen hierdurch das bewegbare Scharnierteil (70) im Eckbereich der Tür (77) fest. Zapfen (65) am Fußteil (63) des Scharnierarmes (60) gestatten eine Positionierung der Tür mit ihren Scharnieranordnungen vor der endgültigen Befestigung. Die beschriebene Scharnieranordnung eignet sich für Schaltschränke, deren Türen einen vorzugsweise bis 180° reichenden Öffnungswinkel haben sollen.

FIG 1

Die Erfindung betrifft eine Scharnieranordnung für die Tür eines Schaltschrankes mit einem an der Frontfläche eines Gerüstelementes des Schaltschrankes anzubringenden Scharnierarm und einem in einem abgekanteten Randbereich der Tür anzubringen bewegbaren Scharnierteil, welcher wenigstens einen Schenkelbereich zum Übergreifen eines mit einer Durchgangsöffnung für einen Scharnierbolzen versehenen Endes des Scharnierarmes aufweist.

Eine Scharnieranordnung dieser Art ist beispielsweise durch die EP-A-O 274 552 bekannt geworden. Aus den grundsätzlich erforderlichen Bauelementen einer Scharnieranordnung ergibt sich eine gewisse Anzahl von Montagevorgängen, die prinzipiell kaum zu verringern ist. Üblich ist es dabei, zunächst den einen Scharnierteil an der Tür und den anderen Scharnierteil am Gerüst oder Schrankkorpus zu befestigen. Die Scharnieranordnung als Ganzes entsteht dann erst beim Einführen des Scharnierbolzens, also beim Ansetzen der Tür an das Gerüst oder den Schrankkorpus. Demgegenüber erscheint es wünschenswert, die Montagevorgänge in bequemer Arbeitshaltung durchführen zu können, da dies einen günstigen Einfluß auf die Güte des Arbeitsergebnisses und die Arbeitssicherheit verspricht. Der Erfindung liegt die Aufgabe zugrunde, eine Scharnieranordnung zu schaffen, die aus wenigen und leicht montierbaren Teilen besteht und die an der Tür und dem Korpus des Schaltschrankes leicht anzubringen ist.

Gemäß der Erfindung wird diese Aufgabe dadurch gelöst, daß der bewegbare Scharnierteil aus zwei, den Scharnierbolzen zwischen sich aufnehmenden Teilstücken gebildet ist, die an ihrer Teilungsebene vorstehende Vorsprünge und zur Aufnahme solcher Vorsprünge des anderen Teilstückes dienende Ausnehmungen aufweisen. Hierdurch wird die Möglichkeit geschaffen, die Scharnieranordnung als Ganzes vorzumontieren und zugleich den Scharnierbolzen gegen Entfernung dauerhaft zu sichern. Die Vorsprünge der Teilstücke des bewegbaren Scharnierteiles können beispielsweise so ausgebildet sein, daß durch Einkerbungen, Übermaß oder gleichartige Gestaltungsmerkmale beide Teilstücke unter Kraftanwendung nach Art einer Schnappverbindung dauerhaft zusammenfügbar sind.

Nach einer Weiterbildung der Erfindung kann jedoch unmittelbar neben einem Vorsprung des einen Teilstückes eine Vertiefung zum Eingreifen eines Vorsprunges des anderen Teilstückes angeordnet sein und beide Vorsprünge können mit einem korrespondierenden Durchgangsloch für ein Verbindungselement versehen sein, wobei jedes Teilstück beidseitig des Durchgangsloches bis zum Rand des Teilstückes führende kanalartige Ausnehmungen besitzt, die zusammen Eintrittskanäle bzw.

Austrittskanäle für Verbindungselemente bilden. Diese Gestaltung ermöglicht es, die Teilstücke ohne Kraftaufwand zusammenzufügen und erst dann durch Einfügen des Verbindungselementes, z. B. eines Stiftes oder einer Schraube, fest zu verbinden. Als korrespondierend werden die Durchgangslöcher im vorliegenden Zusammenhang angesehen, wenn beim Zusammenfügen der Teilstücke das Verbindungselement von dem einen Durchgangsloch in das andere übertreten kann. Durch einen axialen Versatz der Durchgangsöffnungen kann hierbei erreicht werden, daß eine Vorspannkraft geeigneter Größe erzeugt wird, welche die Teilstücke zusammenpreßt.

Ausgehend von der vorstehend erläuterten Gestaltung der Teilstücke können an jedem Teilstück zwei Paare von Vorsprüngen und Vertiefungen vorgesehen sein und die Achsen der Durchgangslöcher können derart winklig zueinanderstehend angeordnet sein, daß ein über die Vorsprünge überstehender Teil des Verbindungselementes an die Innenseite der Tür nahe den Kanten einer Ausnehmung anlegbar ist, in die das aus den Teilstücken zusammengefügte bewegbare Scharnierteil einfügbar ist. Daher werden zur Befestigung des bewegbaren Scharnierteiles an der Tür keine zusätzlichen Befestigungselemente benötigt. Vielmehr genügt es, beispielsweise Schrauben zu verwenden, die länger ausgebildet sind, als es zur Verbindung der Teilstücke erforderlich ist, derart, daß ein ausreichender Überstand über die Vorsprünge gegeben ist.

Zur weiteren Vereinfachung der Handhabung der Teile können die Teilstücke des bewegbaren Scharnierteiles über einen Brückenteil aus biegbarem Material zusammenhängend ausgebildet sein. Dies kann in vorteilhafter Weise dadurch geschehen, daß die Teilstücke des bewegbaren Scharnierteiles als über einen Brückenabschnitt zusammenhängendes Druckgußteil ausgebildet sind und daß durch Verringerung des Materialquerschnittes und durch eine bei einem Teilbetrag des gesamten Biegungswinkels wirksame Anschlagfläche zwischen jedem Teilstück und dem Brückenabschnitt zwei Biegungsbereiche gebildet sind. Auf diese Weise wird eine Überlastung des Werkstoffes im Brückenabschnitt durch die Biegung verhindert.

Eine weitere vorteilhafte Möglichkeit zur Bildung eines biegsamen Brückenabschnittes besteht darin, daß die Teilstücke des bewegbaren Scharnierteiles mit gegenseitigem Abstand in einem aus biegsamem Material bestehenden Mantelkörper befestigt sind. Ein solcher Mantelkörper kann aus einem geeigneten Blech, beispielsweise aus rostfreiem Stahlblech, bestehen.

Eine weitere Vereinfachung der Montage der Scharnieranordnung und insbesondere einer mit solchen Scharnieranordnungen versehenen Tür kann nach einer weiteren Ausgestaltung der Erfindung dadurch erreicht werden, daß der feststehende Scharnierarm einen Fußteil mit in Richtung der Frontfläche des Schaltschrankes vorstehenden Zapfen aufweist und daß in der Frontfläche den Zapfen entsprechende Öffnungen angeordnet sind.

Auf diese Weise kann eine mit Scharnieranordnungen der beschriebenen Art versehene Tür an der Frontfläche des Schaltschrankes vor der endgültigen Befestigung positioniert werden. Dabei ist es nicht erforderlich, die Tür bis zur endgültigen Befestigung zu stützen, wenn die Zapfen durch die Öffnungen der Frontfläche hindurchragend bemessen und die an der Innenseite überstehenden Enden der Zapfen mit einer kantigen Ausnehmung zum Einlegen eines werkzeugartigen Sperrstückes versehen sind. Nach der endgültigen Besfestigung können die Sperrstücke, beispielsweise gewöhnliche Schraubendreher, zur weiteren . Verwendung entfernt werden.

Gegenstand der Erfindung ist ferner ein Verfahren zur Montage einer Scharnieranordnung in der Ausführung mit durch Verbindungselemente zusammenfügbaren Teilstücken des bewegbaren Scharnierteiles und mit verlängert ausgebildeten Zapfen am Fußteil des Scharnierarmes und darin angebrachten kantigen Ausnehmungen. Dieses Verfahren umfaßt folgende Schritte:

a) der Scharnierbolzen wird in die Durchgangsöffnung des Scharnierarmes eingeführt;

b) die Teilstücke des bewegbaren Scharnierteiles werden unter Aufnahme des Scharnierarmes und der über dessen Durchgangsöffnung überstehenden Enden des Scharnierbolzens zusammengefügt;

c) in die korrespondierenden Durchgangslöcher der Vorsprünge beider Teilstücke des bewegbaren Scharnierteiles werden Schrauben soweit eingedreht, daß die Teilstücke miteinander verbunden sind;

d) die vormontierte, aus Scharnierarm, Scharnierbolzen und Teilstücken des bewegbaren Scharnierteiles bestehende Scharnieranordnung wird in eine Ausnehmung im Bereich der Abkantung der Tür eingeführt;

e) durch Weiterdrehen der in die Vorsprünge der Teilstücke eingedrehten Schrauben werden deren Enden an die Innenseite der Tür nahe den Kanten der Ausnehmung der Tür angelegt;

f) die vorgenannten Schritte a) bis e) werden sooft wiederholt, wie die Tür mit weiteren Scharnieranordnungen versehen ist;

g) die Tür mit daran angebrachten Scharnieranordnungen wird durch Einführen der Zapfen an den Fußteilen der feststehenden Scharnierarme in die Öffnungen an der Frontseite des Schaltschranken positioniert und durch Einführen wenigstens eines Sperrstücken in eine Ausnehmung eines der Zapfen wenigstens der obersten Scharnieranordnung vorübergehend befestigt;

h) die Fußteile der feststehenden Scharnierärme werden durch wenigstens eine Befestigungsschraube an der Frontfläche des Schaltschrankes befestigt.

Die Erfindung wird im folgenden anhand der Figuren näher erläutert.

Die Figur 1 zeigt schematisch einen Schaltschrank mit einer Tür sowie mit drei Scharnieranordnungen.

In der Figur 2 ist schematisch vereinfacht in der Draufsicht auf die Teilungsebene ein Teilstück eines bewegbaren Scharnierteiles gezeigt.

Die Figur 3 zeigt im Schnitt zwei zusammengefügte Teilstücke eines bewegbaren Scharnierteiles, von denen das eine im Schnitt III-III gemäß der Figur 2 dargestellt ist.

In der Figur 4 ist gleichfalls im Schnitt der Bereich der Vorsprünge von zwei zusammengefügten Teilstücken eines bewegbaren Scharnierteiles in einer gegenüber der Figur 3 um 90° gedrehten Stellung entsprechend dem Schnitt IV-IV in Figur 2 dargestellt.

Die Figur 5 zeigt zwei als zusammenhängendes Formteil ausgebildete Teilstücke eines bewegbaren Scharnierteiles.

Die Figur 6 zeigt gleichfalls zwei über einen Brückenabschnitt verbundene Teilstücke, wobei der Brückenabschnitt Bestandteil eines beide Teilstücke umgreifenden Mantelteiles ist.

Die Figuren 7 bis 10 dienen zur Erläuterung eines Verfahrens zur Montage einer Scharnieranordnung nach den vorangehenden Darstellungen. Hierbei zeigt die Figur 7 die Zusammenfügung eines Scharnierarmes, eines Scharnierbolzens und von zwei Teilstücken eines bewegbaren Scharnierteiles.

Die Figur 8 zeigt die entsprechend der Figur 7 zusammengefügten Teile mit veränderter Stellung des bewegbaren Scharnierteiles.

Die Figur 9 veranschaulicht die Verbindung der Scharnieranordnung mit einer Tür eines Schaltschrankes und die anschließende Anbringung einer mit Scharnieranordnungen versehenen Tür an einem Gerüstelement eines Schaltschrankes.

Die Figur 10 zeigt abschnittsweise ein vertikales Gerüstelement eines Schaltschrankes mit einer Frontfläche und einer daran angebrachten Scharnieranordnung mit einer Tür.

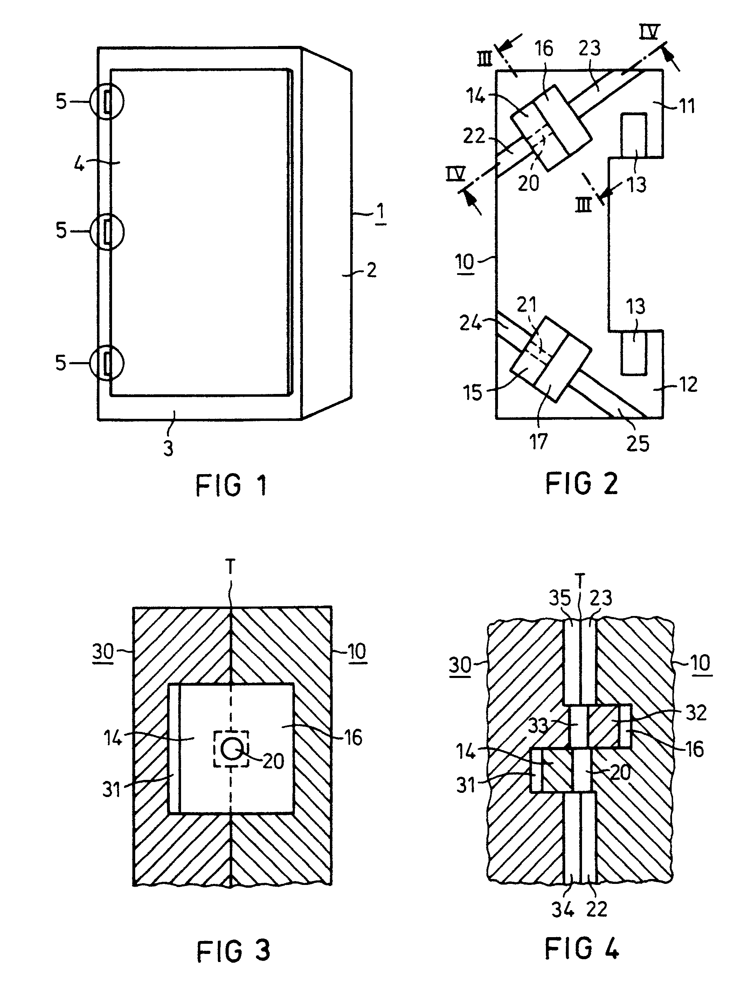

Der in der Figur 1 gezeigte Schaltschrank 1 weist einen Schrankkorpus 2 beliebiger Gestaltung auf und besitzt eine beispielsweise von Gerüstelementen begrenzte Frontfläche 3. Eine Tür 4 ist mittels Scharnieranordnungen 5 an der Frontfläche 3 gelenkig angebracht. Insgesamt sind drei Scharnieranordnungen 5 vorgesehen, die in der Figur 1 mit einem Kreis markiert sind.

Anhand der Figuren 2, 3 und 4 werden zunächst Einzelheiten der bewegbaren Scharnierteile beschrieben, die im Bereich einer Abkantung der Tür 4 anzubringen sind. Jedes bewegbare Scharnierteil besteht aus zwei Teilstücken, von denen ein Teilstück 10 in der Figur 2 vergrößert und schematisch mit Blick auf die Teilungsebene dargestellt ist. In zwei Schenkelbereichen 11 und 12 des Teilstückes 10 sind taschenartige Ausnehmungen 13 vorgesehen, die zur Aufnahme der Enden eines Scharnierbolzens dienen. Ferner besitzt das Teilstück 10 zwei Vorsprünge 14 und 15 und unmittelbar neben diesen Vorsprüngen eine der Querschnittsform der Vorsprünge 14 und 15 entsprechende Vertiefung 16 bzw. 17. Gestrichelt sind Durchgangslöcher 20 bzw. 21 gezeigt, die in den Vorsprüngen 14 und 15 derart angebracht sind, daß sie teilweise oberhalb und unterhalb der Teilungsebene des Teilstückes 10 liegen und somit in Kanäle 22 und 23 bzw. Kanäle 24 und 25 münden, die beidseitig des Vorsprunges 15 angeordnet sind. Durch einen axialen Versatz der Durchgangslöcher 20 und 21 ist dafür gesorgt, daß beim Einführen des Verbindungselementes eine Vorspannung der beiden Teilstücke gegeneinander entsteht. Ferner ist zu erkennen, daß die Vorsprünge derart schräg zu den Kanten des Teilstückes 10 angeordnet sind, daß die Kanäle 22 und 23 sowie 24 und 25 winklig an den Kanten des Teilstückes 10 münden. Der Zweck dieser Gestaltung wird noch erläutert.

In der Figur 3 ist ein Schnitt durch zwei zusammengefügte Teilstücke entsprechend der Figur 2 in der Ebene III-III dargestellt. Hierbei greift der Vorsprung 14 des Teilstückes 10 in eine den Vertiefungen 16 und 17 in Figur 2 entsprechende Vertiefung 31 eines weiteren Teilstückes 30 ein. Das Durchgangsloch 20 des Vorsprunges 14 liegt dabei unsymmetrisch zu der in der Figur 3 mit T bezeichneten Teilungsebene.

Einen weiteren Schnitt durch zwei zusammengefügte Teilstücke 10 und 30, jedoch in der Ebene IV-IV in Figur 2 zeigt die Figur 4. Es ist zu erkennen, daß der Vorsprung 14 des Teilstückes 10 in die Vertiefung 31 des Teilstückes 30 eingreift, während unmittelbar angrenzend ein Vorsprung 32 des Teilstückes 30 in die Vertiefung 16 des Teilstückes 10 eingreift. Das Durchgangsloch 20 des Vorsprunges 14 korrespondiert mit einem ebensolchen Durchgangsloch 33 des Vorsprunges 32. Ebenso korrespondieren Kanäle 22 und 23 des Teilstückes 10, Kanäle 34 und 35 des Teilstückes 30 sowie die Durchgangslöcher 20 und 33 miteinander. Die Durchgangslöcher 20 und 33 sind gegenüber dem gemeinsamen Querschnitt der Kanäle mit einem geringen Durchmesser ausgeführt, um Schrauben, insbesondere gewindefurchende Schrauben verwenden zu können. Ebenso sind stiftartige Verbindungselemente anwendbar.

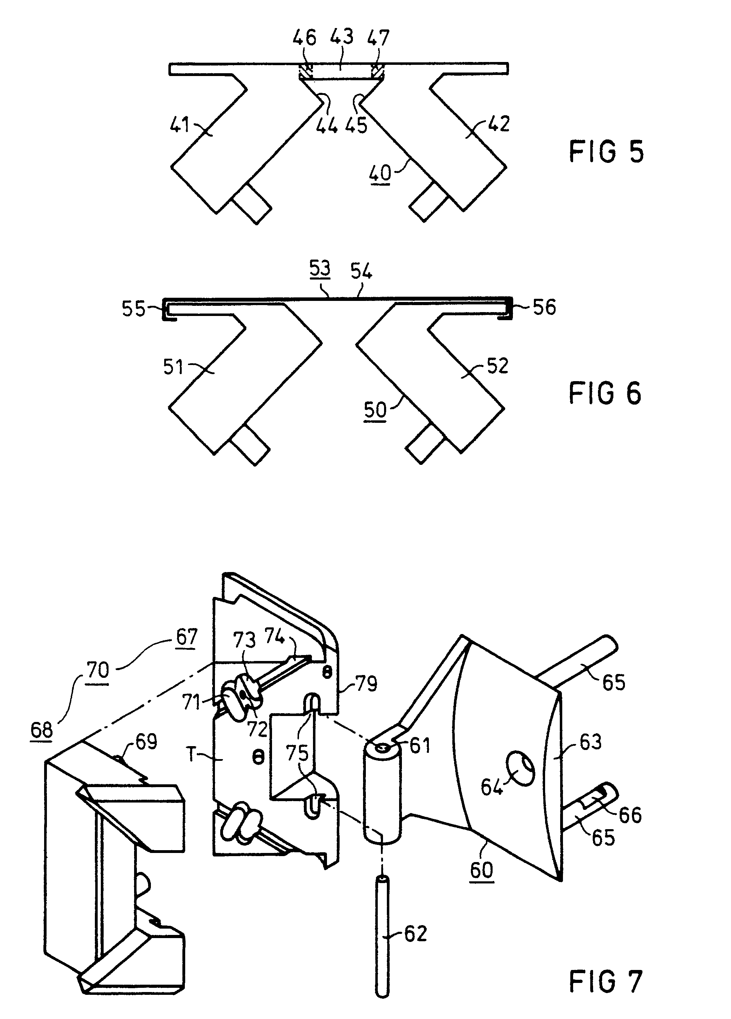

In den Figuren 5 und 6 sind vereinfacht zwei Ausführungsbeispiele für zusammenhängende Teilstücke eines bewegbaren Scharnierteiles gezeigt, welche die Vorgänge beim Zusammenbau einer Scharnieranordnung vereinfachen. In der Figur 5 ist mit 40 als Ganzes ein bewegbares Scharnierteil bezeichnet, das aus Teilstücken 41 und 42 besteht. Beide Teilstücke sind durch einen Brückenabschnitt 43 miteinander verbunden, der einstückig mit den Teilstücken 41 und 42 ausgebildet ist. Das gesamte bewegbare Scharnierteil 40 kann beispielsweise als Metall-Druckgußteil oder als Kunststoff-Spitzgußteil hergestellt sein. Die Gestaltung des Brückenabschnittes 43 und insbesondere seine Dicke hängt von dem gewählten Werkstoff ab und wird zweckmäßig so ausgebildet, daß ohne allzu großen Bewegungswiderstand eine Biegung der Teilstücke 41 und 42 relativ zueinander vorgenommen werden kann. Durch eine Anschlagfläche 44 an dem Teilstück 41 und eine weitere Anschlagfläche 45 an dem Teilstück 42 ist dafür gesorgt, daß der Brückenabschnitt 43 nicht an einer Stelle mit dem gesamten Biegewinkel beaufschlagt wird, sondern daß sich die Biegung im wesentlichen auf die schraffiert angedeuteten Biegungsbereiche 46 und 47 gleichmäßig verteilt.

Das bewegbare Scharnierteil 50 gemäß der Figur 6 umfaßt gleichfalls Teilstücke 51 und 52, die jedoch nicht über einen einstückigen Brückenabschnitt, sondern durch ein Mantelteil 53 zusammenhängen. Beispielsweise kann das Mantelteil 53 ein biegsames oder federnd biegsames Blechteil sein, welches zugleich die Funktion einer äußeren abschließenden Verkleidung des bewegbaren Scharnierteiles hat. Als Brückenabschnitt 54 wirkt in dem Beispiel gemäß der Figur 6 ein zwischen den Teilstücken 51 und 52 freiliegender Abschnitt des Mantelteiles 53. Die Befestigung der Teilstücke 51 und 52 an dem Mantelteil 53 ist auf unterschiedliche Weise möglich, beispielsweise durch die in der Figur 6 angedeutete klammerartige Gestaltung der Schenkel 55 und 56.

Im folgenden werden die einzelnen Schritte eines Verfahrens zur Montage einer Scharnieranordnung der vorstehend erläuterten Art beschrieben.

Die Figur 7 zeigt als Bestandteile einer Scharnieranordnung einen Scharnierarm 60 mit einer Durchgangsöffnung 61 für einen Scharnierbolzen 62 sowie mit einem Fußteil 63, der zur Auflage auf einer Frontfläche eines Gerüstelementes vorgesehen ist. Der Fußteil 63 ist mit einer Durchgangsöffnung 64 für eine Befestigungsschraube sowie mit zwei Zapfen 65 versehen, die sich von dem Fußteil 63 in Richtung der Frontfläche erstecken. Die Länge der Zapfen 65 ist so bemessen, daß sie beim Aufliegen des Fußteiles 63 auf der Frontfläche durch entsprechende Öffnungen in dieser Frontfläche hindurchragen und daß in diesen über die Öffnungen der Frontfläche innen überstehenden Teilen der Zapfen 65 befindliche kantige Ausnehmungen 66 zugänglich sind.

In der Figur 7 sind ferner einander gegenüberstehend zwei zusammenfügbare Teilstücke 67 und 68 gezeigt, die zusammen ein bewegbares Scharnierteil 70 bilden. Im Prinzip entsprechen die Teilstücke 67 und 68 den anhand der schematischen Figuren 2, 3 und 4 erläuterten Teilstücken 10 und 30. An dem Teilstück 67 erkennbar sind insbesondere ein Vorsprung 71 mit einen Durchgangsloch 72, sowie mit einer anschließenden Vertiefung 73. Ebenso ist ein mit den Durchgangsloch 72 korrespondierender Kanal 74 gezeigt.

Die Montage der in der Figur 7 gezeigten Teile beginnt mit der Einführung des Scharnierbolzens 62 in die Durchgangsöffnung 61 des Scharnierarmes 60. Der Scharnierarm 60 ist nun zwischen die Schenkelabschnitte 79 des Scharnierteiles 67 derart einzuführen, daß die über die Durchgangsöffnung 61 überstehenden Enden des Scharnierbolzens 62 in entsprechende taschenartige Ausnehmungen 75 des Teilstückes 67 eingreifen. Anschließend wird das Teilstück 68 auf das Teilstück 67 derart aufgelegt, daß in der anhand der Figur 4 erläuterten Weise die Vorsprünge der beiden Teilstücke in die benachbarten Ausnehmungen des anderen Teilstückes eingreift. Wie die Figur 7 zeigt, gelangt dabei insbesondere ein Vorsprung 69 des Teilstückes 68 in Eingriff mit der Ausnehmung 73 des Teilstückes 67, während der Vorsprung 71 des Teilstückes 67 in eine entsprechende, in der Figur 7 jedoch verdeckte Ausnehmung eingreift. Falls die Mittelachse des Scharnierbolzens 62 nicht in der Teilungsebene der Teilstücke liegen soll, kann die Tiefe der taschenartigen Ausnehmungen dem Durchmesser des Scharnierbolzens 62 ganz oder teilweise entsprechend gewählt sein. Andernfalls kann das Teilstück 68 mit ebensolchen taschenartigen Ausnehmungen versehen sein.

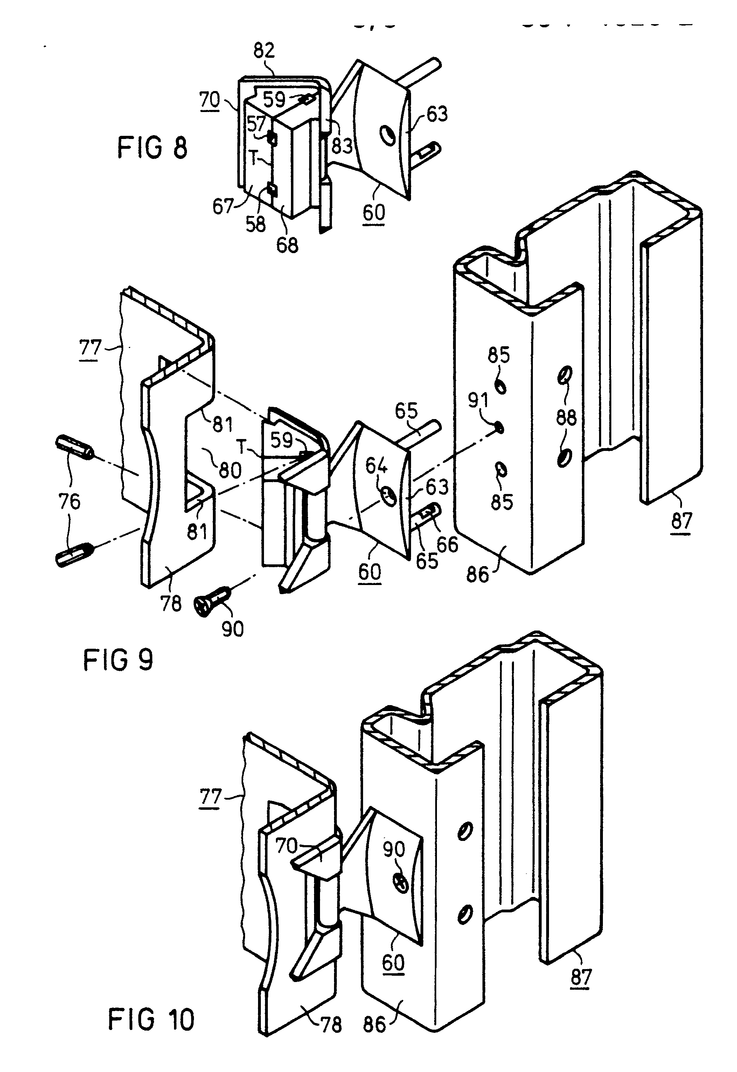

In der Figur 8 sind die Teile gemäß der Figur 7 im zusammengefügten Zustand gezeigt. Werden nun Madenschrauben 76 in die zu den Durchgangslöchern der Vorsprünge führenden Kanäle eingeführt und in die Durchgangslöcher eingedreht, so sind die Teilstücke 67 und 68 miteinander verbunden. Der erwähnte axiale Versatz der Durchgangslöcher bewirkt dabei eine gegenseitige Vorspannung der Teilstücke 67 und 68. In der Figur 8 sind zum Einführen der Madenschrauben 76 dienende Eintrittskanäle 57 und 58 gezeigt. Ferner ist an der Oberseite des Scharnierteiles 70 ein Austrittskanal 59 sichtbar, durch den eine der Madenschauben austreten kann.

Der folgende Schritt besteht in der Anbringung der Scharnieranordnung gemäß der Figur 8 an einer in der Figur 9 abschnittsweise gezeigten Tür 77, die im Bereich ihrer randseitigen Abkantung 78 mit einer über die Ecke reichenden Ausnehmung 80 versehen ist. Randstege der Teilstücke 67 und 68, die in den Figuren 7, 8 und 9 teilweise sichtbar und mit 82 bzw. 83 bezeichnet sind, bilden dabei Anlageflächen am Rand der Ausnehmung 80. Durch das weitere Eindrehen der Madenschrauben 76 (Figur 9) wird nun der bewegbare Scharnierteil 70 dadurch fest in die Ecke der Tür 77 hineingezogen, daß die Madenschrauben 76 aus den hierfür vorgesehenen Kanälen (vgl. Kanal 59 in Figur 9) austreten und nahe den Kanten 81 der Durchbrechung 80 an der Innenseite der Tür 77 anstoßen. Durch die insbesondere aus dem mittleren Teil der Figur 9 ersichtliche winklige Lage der Teilungsebene T zu den Randstegen 81 und 82 wird erreicht, daß der bewegbare Scharnierteil annähernd gleichmäßig gegen die Ecke der Tür 77 gezogen wird.

Die beschriebenen Vorgänge werden sooft wiederholt, wie die Tür 77 mit Scharnieranordnungen zu versehen ist. In Abhängigkeit von der Größe und dem Gewicht der Tür 77 können zwei, drei oder mehrere Scharnieranordnungen vorgesehen sein. In dem schematischen Beispiel gemäß der Figur 1 sind drei Scharnieranordnungen gezeigt. Anschließend wird die Tür durch Einführen der Zapfen 65 der Fußteile 63 der Scharnierarme 60 in Löcher 85 in einer Frontfläche 86 eines vertikalen Gerüstelementes 87 an dem Gerüstelement positioniert. Wird nun in die kantigen Ausnehmungen 66 wenigstens eines der Zapfen 65 der obersten Scharnieranordnung der Tür 77 ein Sperrstück eingelegt, so ist die Tür vorübergehend gesichert und braucht zunächst nicht weiter gestützt zu werden. Als Sperrstück eignet sich beispielsweise ein üblicher Schraubendreher mit Flachklinge, der durch eine in der Figur 9 gezeigte seitliche Öffnung 88 des Gerüstelementes 87 eingeführt wird. Durch Eindrehen je einer Schraube 90 in ein zwischen den Löchern 85 in der Frontfläche 86 angeordnetes Schraubenloch 91 werden dann alle Scharnierarme mit dem Gerüstelement 87 verbunden.

Die Figur 10 zeigt die fertiggestellte Gesamtanordnung aus Scharnierarm 60, bewegbarem Scharnierteil 70, Tür 77 und vertikalem Gerüstelement 87. Wie man erkennt, ergibt die Lage des Scharnierbolzens nahe dem Eckbereich der Tür 77 einen großen Öffnungswinkel bis 180°.

Gegenüber den beschriebenen Ausführungsbeispielen können zahlreiche Abwandlungen vorgenommen werden, ohne vom Inhalt der Erfindung abzuweichen. Dies gilt insbesondere für die Form der Vorsprünge der Teilstücke der bewegbaren Scharnierteile, die rechteckig wie in der Figur 2, abgerundet wie in der Figur 7 oder in jeder anderen geeigneten Querschnittsform ausgebildet sein können. Ferner kann ein lediglich dem Zusammenhalt der Teilstücke bis zu ihrer gemeinsamen Anbringung an der Tür als bewegbares Scharnierteil dienendes Paar von Vorsprüngen und Ausnehmungen vorgesehen sein, während die anderen Paare von Vorsprüngen und Vertiefungen zur Ausrichtung der Teilstücke dienen. In jeweils einem der Vorsprünge kann eine zum Festspannen des bewegbaren Scharnierteiles an der Tür dienende Schraube bereits zur Vorbereitung eingedreht sein, bevor die Teilstücke zusammengefügt werden.

## Patentansprüche

1. Scharnieranordnung für die Tür (77) eines Schaltschrankes mit einem an der Frontfläche (86) eines Gerüstelementes (87) des Schaltschrankes anzubringenden Scharnierarm (60) und einem in einem abgekanteten Randbereich (78) der Tür (77) anzubringenden bewegbaren Scharnierteil (70), welcher wenigstens einen Schenkelbereich (79) zum Übergreifen eines mit einer Durchgangsöffnung (61) für einen Scharnierbolzen (62) versehenen Endes des Scharnierarmes (60) aufweist, **dadurch gekennzeichnet ,** daß der bewegbare Scharnierteil (70) aus zwei, den Scharnierbolzen (62) zwischen sich aufnehmenden Teilstücken (67, 68) gebildet ist, die an ihrer Teilungsebene (T) vorstehende Vorsprünge (71) und zur Aufnahme entsprechender Vorsprünge (69) des anderen Teilstückes (68) dienende Ausnehmungen (73) aufweisen.

2. Scharnieranordnung nach Anspruch 1, **dadurch gekennzeichnet ,** daß unmittelbar neben einem Vorsprung (14; 71) des einen Teilstückes (10; 68) eine Vertiefung (16; 73) zum Eingreifen eines Vorsprunges (32; 69) des anderen Teilstückes (30; 68) angeordnet ist und daß beide Vorsprünge (14, 32; 69, 71) mit einem korrespondierenden Durchgangsloch (20, 33; 72) für ein Verbindungselement (76) versehen sind, wobei jedes Teilstück (10, 30; 67, 68) beidseitig des Durchgangsloch (20, 33; 72) bis zum Rand des Teilstückes führende kanalartige Ausnehmungen (22, 23, 34, 35) besitzt, die zusammen Eintrittskanäle (57, 58) bzw. Austrittskanäle (59) für die Verbindungselemente (76) bilden.

3. Scharnieranordnung nach Anspruch 2, **dadurch gekennzeichnet ,** daß die Durchgangslöcher (20, 21, 33; 72) der zusammenwirkenden Vorsprünge (14, 15, 32; 69, 71) der zusammengefügten Teilstücke (10, 67, 68) axial derart gegeneinander versetzt angeordnet sind, daß beim Einsetzen eines Verbindungselementes (76) eine die Teilstücke (10, 67, 68) zusammenpressende Vorspannkraft entsteht.

4. Scharnieranordnung nach Anspruch 3, **dadurch gekennzeichnet ,** daß an jedem Teilstück (10, 30; 67, 68) zwei Paare von Vorsprüngen (14, 15; 69, 71) und Vertiefungen (16, 17, 31; 73) vorgesehen sind und daß die Achsen der Durchgangslöcher (20, 21, 33; 73) winklig derart zueinanderstehend angeordnet sind, daß ein über die Vorsprünge (14, 15, 32; 69 71) überstehender Teil des Verbindungselementes (76) an die Innenseite der Tür (77) nahe den Kanten (81) einer Ausnehmung (80) anlegbar ist, in die das aus den Teilstücken (10, 30; 67, 68) zusammengefügte bewegliche Scharnierteil (70) einfügbar ist.

5. Scharnieranordnung nach einem der vorangehenden Ansprüche, **dadurch gekennzeichnet ,** daß die Teilstücke (41, 42; 51, 52) des bewegbaren Scharnierteiles (40; 50) über einen Brückenabschnitt (43; 54) aus biegbarem Material verbunden sind.

6. Scharnieranordnung nach Anspruch 5, **dadurch gekennzeichnet ,** daß die Teilstücke (41, 42) des bewegbaren Scharnierteiles (43) als zusammenhängendes Druckgußteil oder Spritzgußteil ausgebildet sind und daß durch Verringerung des Materialquerschnittes und durch eine bei einem Teilbetrag des gesamten Biegungswinkels wirksame Anschlagfläche (44, 45) zwischen jedem Teilstück (41, 42) und dem Brückenabschnitt (43) zwei Biegungsbereiche (46, 47) gebildet sind.

7. Scharnieranordnung nach Anspruch 5, **dadurch gekennzeichnet ,** daß die Teilstücke (51, 52) des bewegbaren Scharnierteiles (54) mit gegenseitigem Abstand in einem aus biegsamem Material bestehenden Mantelkörper (53) befestigt sind.

8. Scharnieranordnung nach einem der vorangehenden Ansprüche, **dadurch gekennzeichnet ,** daß der feststehende Scharnierarm (60) ein Fußteil (63) mit in Richtung der Frontfläche (86) des Schaltschrankes vorstehenden Zapfen (65) aufweist und daß in der Frontfläche (86) den Zapfen (65) entsprechende Öffnungen (85) angeordnet sind.

9. Scharnieranordnung nach Anspruch 8, **dadurch gekennzeichnet ,** daß die Zapfen (65) durch die Öffnungen (85) der Frontfläche (86) hindurchragend bemessen sind und daß die an der Innenseite überstehenden Enden der Zapfen (65) mit einer kantigen Ausnehmung (66) zum Einlegen eines werkzeugartigen Sperrstückes versehen sind.

**10.** Verfahren zur Montage einer Scharnieranordnung nach Anspruch 8, **gekennzeichnet durch** folgende Schritte:

a) der Scharnierbolzen (62) wird in die Durchgangsöffnung (61) des Scharnierarmes (60) eingeführt;

b) die Teilstücke (67, 68) des bewegbaren Scharnierteiles (70) werden unter Aufnahme des Scharnierarmes (60) und der über dessen Durchgangsöffnung (61) überstehenden Enden des Scharnierbolzens (62) zusammengefügt;

c) in die korrespondierende Durchgangslöcher (72) der Vorsprünge (69, 71) beider Teilstücke (67, 68) des bewegbaren Scharnierteiles (70) werden Schrauben (76) soweit eingedreht, daß die Teilstücke (67, 68) miteinander verbunden sind;

d) die vormontierte, aus Scharnierarm (60), Scharnierbolzen (62) und Teilstücken (67, 68) des bewegbaren Scharnierteiles (70) bestehende Scharnieranordnung wird in eine Ausnehmung (80) im Bereich der Abkantung (78) der Tür (77) eingeführt;

e) durch Weiterdrehen der in die Vorsprünge (69, 71) der Teilstücke (67, 68) eingedrehten Schrauben (76) werden deren Enden an die Innenseite der Tür (77) nahe den Kanten (81) der Ausnehmung (80) der Tür (77) angelegt;

f) die Schritte a) bis e) werden sooft wiederholt, wie die Tür (77) mit weiteren Scharnieranordnungen zu versehen ist;

g) die Tür (77) mit daran angebrachten Scharnieranordnungen wird durch Einführen der Zapfen (65) der Fußteile (63) der feststehenden Scharnierarme (60) in die Öffnungen (85) an der Frontseite (86) des Schaltschrankes positioniert und durch Einführen wenigstens eines Sperrstückes in eine kantige Ausnehmung (66) eines der Zapfen (65) wenigstens der obersten Scharnieranordnung vorübergehend befestigt;

h) die Fußteile (63) der feststehenden Scharnierarme (60) werden durch wenigstens eine Befestigungsschraube (90) an der Frontfläche (86) des Schaltschrankes befestigt.

FIG 1

FIG 2

FIG 3

FIG 4

FIG 5

FIG 6

FIG 7

FIG 8

FIG 9

FIG 10

## Europäisches Patentamt

# EUROPÄISCHER RECHERCHENBERICHT

Nummer der Anmeldung

**EP 90 73 0001**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | EP-A-0 274 552  (RAMSAUER)<br>* Spalte 7, Zeile 56 - Spalte 9, Zeile 21 * | 1 | E 05 D 7/10<br>E 05 D 7/12 |
| A | | 2,4,10 | E 05 D 5/02<br>H 02 B 1/26 |
| Y | US-A-4 400 847  (FARBER)<br>* Spalte 2, Zeile 37 - Spalte 3, Zeile 51; Figuren 2,3 * | 1 | |
| A | | 2,4,10 | |
| A | DE-A-2 605 137  (SOCIETA ALLUMINIO VENETO PER AZIONI)<br>* Seite 3, Zeile 14 - Seite 4, Zeile 5; Ansprüche 1,2; Figur 1 * | 2 | |
| A | FR-A-2 313 529  (SCHUCO)<br>* Seite 3, Zeilen 10 - 12; Figur 2 * | 3 | |
| A | US-A-3 107 390  (SHELTON)<br>* Spalte 3, Zeilen 26 - 37; Spalte 4, Zeilen 20 - 23; Figuren 7- 12 * | 5,6 | |
| A | FR-A-2 534 619  (KITIGAWA)<br>* Seite 4, Zeilen 23 - 25; Seite 7, Zeilen 21 - 29; Figuren 2,5 * | 6 | RECHERCHIERTE SACHGEBIETE (Int. Cl.5) |
| A | DE-C-3 631 671  (HAHN)<br>* Spalte 3, Zeilen 41 - 53; Figur 2 * | 8,9 | E 05 D<br>H 02 B |

Der vorliegende Recherchenbericht wurde für alle Patentansprüche erstellt

| Recherchenort | Abschlußdatum der Recherche | Prüfer |
|---|---|---|
| Den Haag | 19 Oktober 90 | GUILLAUME G.E.P. |